# EUROPÄISCHE PATENTSCHRIFT

(11) **EP 1 941 239 B1**
(45) Veröffentlichungstag und Bekanntmachung des Hinweises auf die Patenterteilung: **31.07.2013**
(21) Anmeldenummer: 06807166.1
(22) Anmeldetag: 11.10.2006
(51) Int. Cl.: G01C 21/36

(54) **Navigationssystem und Navigationsverfahren**
Navigation system and navigation method
Système de navigation et procédé de navigation

(30) Priorität: 18.10.2005 DE 102005049769
(43) Veröffentlichungstag der Anmeldung: 09.07.2008
(73) Patentinhaber: ROBERT BOSCH GMBH, 70442 Stuttgart (DE)
(72) Erfinder: MUELLER, Guido, 06484 Quedlinburg (DE)
(86) Internationale Anmeldenummer: PCT/EP2006/067298
(87) Internationale Veröffentlichungsnummer: WO 2007/045583

(56) Entgegenhaltungen:
- EP-A- 1 300 774
- EP-A2- 1 550 976
- US-B1- 6 208 935

## Beschreibung

### Technisches Gebiet

Die vorliegende Erfindung betrifft ein Navigationssystem gemäß dem Oberbegriff des Anspruchs 1 sowie ein Navigationsverfahren gemäß dem Oberbegriff des Anspruchs 6.

### Stand der Technik

Zur Darstellung des Ergebnisses einer Routensuche wird bei konventionellen Navigationssystemen eine Liste von Namen der zur Route gehörenden Straßen erzeugt. Die Einträge beinhalten zumeist neben dem eigentlichen Namen auch eine eventuell vorhandene Nummer der Straße oder auch den Ort, zu dem diese Straße gehört.

In einigen Fällen gibt es für einen bestimmten Straßenabschnitt nicht nur einen Namen bzw. eine Nummer, sondern auch noch eine(n) zweite(n) oder noch weitere Namen bzw. Nummern. Dabei sind sämtliche Namen bzw. Nummern des Abschnitts gleichwertig, was im Besonderen für Straßennummern gilt.

Die Reihenfolge der Darstellung von gleichwertigen Informationen wird vom Nutzer derart wahrgenommen, dass die Bedeutung von der ersten Information zur letzten Information abnimmt. Der ersten und somit wichtigsten Information kommt somit eine besondere Bedeutung zu, so dass diese als primäre Information bezeichnet werden kann.

Welcher Name bzw. welche Nummer primär genutzt wird, ist bei konventionellen Navigationssystemen eher zufällig. Bei Straßennummern gibt es durch die Straßenkategorie, zum Beispiel durch die Kategorie Autobahn, Bundesstraße, Europastraße, Kreisstraße oder Landstraße, zumindest eine gewisse Priorität. Jedoch ist die Reihenfolge innerhalb einer Straßenkategorie zufällig oder die Straßennummern werden nach dem Zahlenwert aufsteigend verwendet.

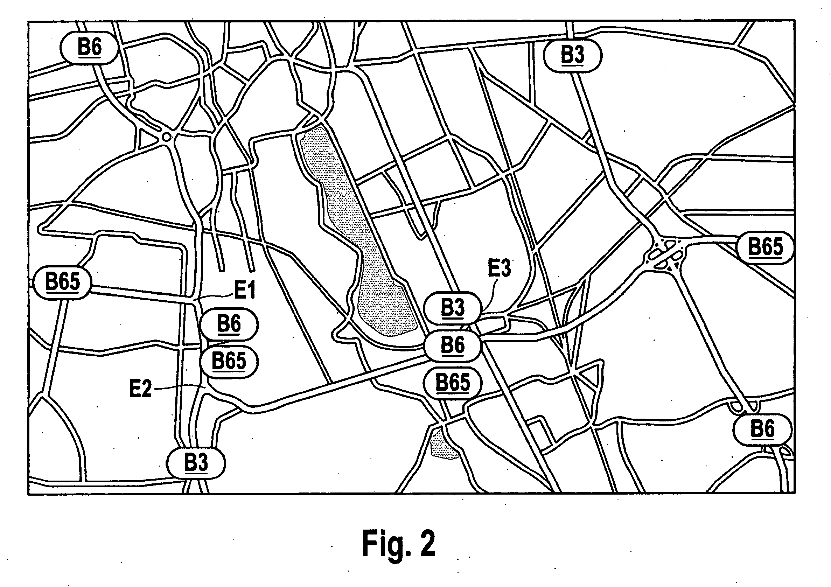

Diese Problematik soll nachfolgend veranschaulicht werden, indem einige Beispiele der Ausgabe von Fahrempfehlungen in Bezug auf Straßennummern gegeben werden. Als Beispiele dienen Routen bezüglich der in Fig. 2 allgemein dargestellten Straßensituation.

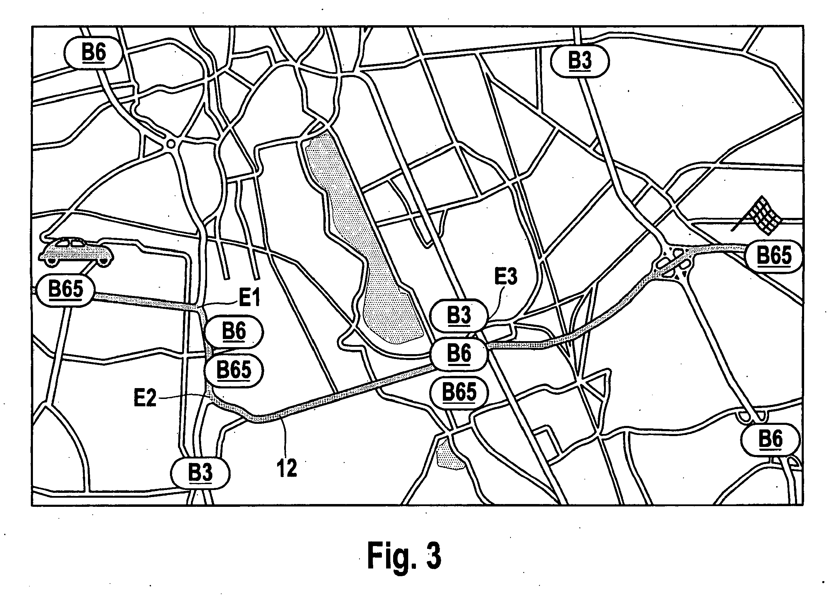

Anhand der in Fig. 3 dargestellten ersten Route (Bezugszeichen 12) wird die aktuelle Darstellung der Fahrempfehlungen in konventionellen Navigationsgeräten, wie etwa im Modell "DX-N" der Firma Blaupunkt oder in ähnlichen Navigationsgeräten, veranschaulicht.

Die erste Route 12 verläuft
- bis zum ersten Entscheidungspunkt E1, insbesondere bis zum ersten Ortspunkt bzw. zur ersten Verzweigung, entlang der Bundesstraße B65,
- bis zum zweiten Entscheidungspunkt E2, insbesondere bis zum zweiten Ortspunkt bzw. zur zweiten Verzweigung, entlang der Bundesstraße B6 sowie der Bundesstraße B65,
- bis zum dritten Entscheidungspunkt E3, insbesondere bis zum dritten Ortspunkt bzw. zur dritten Verzweigung, entlang der Bundesstraße B3, der Bundesstraße B6 sowie der Bundesstraße B65 und
- bis zum Ziel entlang der Bundesstraße B65.

Ohne eine spezielle Sortierung wird in konventionellen Navigationsgeräten folgendes angezeigt:

| | |
|---|---|
| + B65 | --> E1 |
| + B6/B65 | --> E2 |
| + B3 / B6 / B65 --> | E3 |
| + B65 | |

In Abhängigkeit vom verwendeten Softwarestand bzw. Datenträger werden für die Kreuzungen bzw. Verzweigungen E1, E2, E3 zudem die angrenzenden Straßen angezeigt:

| | |
|---|---|
| + B65 | --> E1 [B6] [B65] |
| + B6 / B65 | --> E2 [B3] [B6] [B65] |
| + B3 / B6 / B65 | --> E3 [B3] [B6] [B65] |
| + B65 | |

Anhand dieser ersten Beispielroute 12 wird deutlich, dass, obwohl die gesamte erste Route 12 kontinuierlich über die Bundesstraße B65 verläuft, in der Routenliste die bedeutenden oder primären Straßennummern permanent wechseln. Besonders problematisch wirkt sich dieser Umstand aus, wenn die bedeutende oder primäre Nummer neben oder anstelle einer optischen Anzeige gesprochen wird:

| *Routenliste* | | *Fahrempfehlungen* |
|---|---|---|
| + B65 | --> E1 | "Rechts abbiegen und der B6 folgen" |
| + B6 / B65 | --> E2 | "Links abbiegen und der B3 folgen" |
| + B3 / B6 / B65 | --> E3 | "Geradeaus fahren und der B65 folgen" |
| +B65 | | |

Durch das durch die Fahrempfehlungen suggerierte permanente Wechseln der Straßennummer wird der Fahrer mit wenig hilfreichen Informationen belastet und unnötig vom Straßenverkehr abgelenkt, was ungewünscht ist.

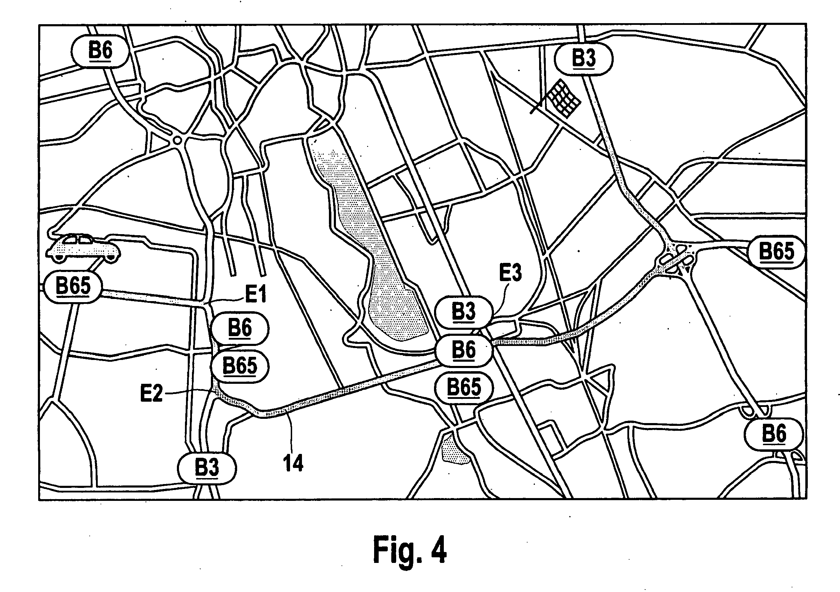

Die im Folgenden anhand Fig. 4 beschriebene zweite Route (Bezugszeichen 14) charakterisiert einen scheinbar sehr ähnlichen Problemfall, der aufgrund seiner anderen Ergebnisausprägung von Bedeutung ist.

Die zweite Route 14 verläuft
- bis zum ersten Entscheidungspunkt E1, insbesondere bis zum ersten Ortspunkt bzw. zur ersten Verzweigung, entlang der Bundesstraße B65,
- bis zum zweiten Entscheidungspunkt E2, insbesondere bis zum zweiten Ortspunkt bzw. zur zweiten Verzweigung, entlang der Bundesstraße B6 sowie der Bundesstraße B65,
- bis zum dritten Entscheidungspunkt E3, insbesondere bis zum dritten Ortspunkt bzw. zur dritten Verzweigung, entlang der Bundesstraße B3, der Bundesstraße B6 sowie der Bundesstraße B65 und
- bis zum Ziel entlang der Bundesstraße B3.

Die eingangs benannten Navigationssysteme, wie etwa das Modell "DX-N" der Firma Blaupunkt und ähnliche Navigationssysteme, stellen die Routenliste wie folgt dar und gegeben dementsprechend folgende Fahrempfehlungen aus:

| Routenliste | | Fahrempfehlungen |
|---|---|---|
| + B65 | --> E1 | "Rechts abbiegen und der B6 folgen" |
| + B6 / B65 | --> E2 | "Links abbiegen und der B3 folgen" |
| + B3 / B6 / B65 | --> E3 | "Rechts abbiegen und der B3 folgen" |
| + B3 | | |

Im Gegensatz zur ersten Route 12 (vgl. Fig. 3) erfolgt bei der zweiten Route 14 (vgl. Fig. 4) ein tatsächlich notwendiger Wechsel der Straßennummer, aber dem Nutzer werden zwei Wechsel der Straßennummer mitgeteilt. Die zweite Beispielsroute 14 ist speziell zur Darstellung echter Wechsel der Straßennummer beschrieben, da diese Wechsel der Straßennummern einer typischen Ausprägung der vorliegenden Erfindung unterworfen sein können.

In der Druckschrift US 6 208 935 B1 ist ein Kartenapplikationssystem offenbart, das ein automatisches Bewegen durch einen virtuellen Raum dergestalt ermöglicht, dass die dargestellte Information entsprechend den Interessen des Nutzers sowie der Tageszeit angepasst wird.

Zum technologischen Hintergrund der vorliegenden Erfindung wird ergänzend auf die Druckschriften
- EP 1 300 774 Al, die einen Informationsbeurteilungsdienst betrifft, und
- EP 1 550 976 A2, die ein Informationsbearbeitungsgerät sowie ein Informationsbearbeitungsverfahren betrifft,
aufmerksam gemacht.

### Darstellung der vorliegenden Erfindung: Aufgabe, Lösung, Vorteile

Ausgehend von den vorstehend dargelegten Nachteilen und Unzulänglichkeiten sowie unter Würdigung des umrissenen Standes der Technik liegt der vorliegenden Erfindung die Aufgabe zugrunde, Navigationssystem der eingangs genannten Art sowie ein Navigationsverfahren der eingangs genannten Art so weiterzuentwickeln, dass an sich gleichwertige Daten oder Informationen, wie beispielsweise Straßennamen oder Straßennummern eines Pfades oder einer Route, in Bezug auf aufeinanderfolgende Einheiten, wie beispielsweise in Bezug auf aufeinanderfolgende Abschnitte des Pfades oder der Route, gewichtet werden, insbesondere dass keine falschen, den Benutzer irritierenden und/oder störenden Informationen, insbesondere Fahrempfehlungen, ausgegeben werden.

Diese Aufgabe wird durch ein Navigationssystem mit den im Anspruch 1 angegebenen Merkmalen sowie durch ein Navigationsverfahren mit den im Anspruch 6 angegebenen Merkmalen gelöst. Vorteilhafte Ausgestaltungen und zweckmäßige Weiterbildungen der vorliegenden Erfindung sind in den jeweiligen abhängigen Ansprüchen gekennzeichnet.

Gemäß der vorliegenden Erfindung erfolgt die Beschreibung von aufeinanderfolgenden Einheiten, zum Beispiel die Beschreibung eines aus verschiedenen Routenabschnitten zusammengesetzten Pfads, durch Informationen in Bezug auf diese Einheiten, insbesondere durch Informationen in Bezug auf die einzelnen Routenabschnitte.

Dabei ist jeder Einheit mindestens eine Informationsliste mit mindestens einem Informationselement zugeordnet. Die den Einheiten zugeordneten Informationslisten betreffen vorteilhafterweise jeweils mindestens eine Informationskategorie oder Informationsart. Beispielsweise kann das mindestens eine Informationselement der jeweiligen Informationsliste mindestens einen Straßennamen und/oder mindestens eine Straßennummer aufweisen und der Informationskategorie "Fernstraße" zugeordnet sein.

Es ist auch möglich, dass jeder dieser Einheiten, insbesondere jedem dieser Routenabschnitte, verschiedene Informationslisten zugeordnet sind, die jeweils unterschiedliche Informationskategorien betreffen.

Bei der gemäß der Lehre der vorliegenden Erfindung vorgenommenen Gewichtung des einen oder der mehreren Informationselemente der jeweiligen Informationsliste wird gemäß einer vorteilhaften Ausgestaltung der vorliegenden Erfindung dieses Informationselement mindestens einer von mindestens zwei Prioritätskategorien, zum Beispiel der Kategorie primäres Informationselement bzw. der Kategorie alternatives Informationselement, zugeordnet.

Des Weiteren kann das eine Informationselement oder können die mehreren Informationselemente in der jeweiligen Informationsliste entsprechend seiner bzw. ihrer Gewichtung sortiert werden, wobei die Anordnung oder Reihenfolge der Informationselemente in der jeweiligen Informationsliste die Bedeutung oder die Wertigkeit des jeweiligen lnformationselements widerspiegelt. Gemäß einer vorteilhaften Ausführungsform der vorliegenden Erfindung hat also das erste Element die größte Bedeutung und wird als primäres Element bezeichnet.

Eine vorteilhafte Ausführungsform des Informationssystems der vorliegenden Erfindung ist dazu ausgelegt, zumindest einen Teil der gewichteten, zum Beispiel der der Kategorie primäres Informationselement zugeordneten, Informationen, zum Beispiel als mindestens eine Fahrempfehlung, auszugeben. Diese Ausgabe der Informationen kann vorteilhafterweise optisch und/oder akustisch erfolgen.

Da verschiedene Informationskategorien oder verschiedene Informationsarten untereinander keine direkte Beziehung aufweisen müssen, werden gemäß einer vorteilhaften Ausführung der vorliegenden Erfindung bei der Gewichtung des mindestens einen Informationselements der jeweiligen Informationsliste nur dieselbe Informatiunskategorie oder dieselbe Informationsart betreffende Informationslisten der anderen Einheiten berücksichtig.

Zur besseren Verunschaulichung beziehen sich im Folgenden die beschriebenen vorteilhaften Ausprägungen der vorliegenden Erfindung in einem Gewichtungsdurchlauf immer nur auf eine Informationskategorie bzw. auf eine Informationsart.

Falls Informationselemente mehrerer Informationskategorien oder mehrerer Informationsarten (gewichtet werden sollen, so wird vorteilhafterweise die Gewichtung sukzessive für jede Informationskategorie durchlaufen.

Dabei kann die Gewichtung der jeweiligen Informationselemente von Informationslisten unterschiedlicher Informationskategorien oder unterschiedlicher Informationsarten auf unterschiedliche Weise bestimmt werden; beispielsweise kann für jede Informationskategorie eine andere Ausprägung, insbesondere Verfahrensausprägung, der vorliegenden Erfindung angewendet werden.

So kann gemäß einer vorteilhaften Ausführungsform der vorliegenden Erfindung die Gewichtung des jeweiligen Informationselements, insbesondere die Vorgabe für das mindestens eine primäre Element der jeweiligen Informationsliste, durch die Gewichtung des entsprechenden Informationselements in mindestens einer der weiteren Einheiten, insbesondere im vorangehenden und/oder nachfolgenden räumlichen und/oder zeitliche Abschnitt, zum Beispiel im vorangehenden und/oder nachfolgenden Routenabschnitt des Pfades, bestimmt werden.

Sofern beispielsweise die Vorgabe für das mindestens eine primäre Element der jeweiligen Informationsliste durch das primäre Element der räumlich und/oder zeitlich vorangegangenen Einheit bestimmt wird, erfolgt ein Wechsel der als primäres Element bestimmten Information möglichst spät.

Bei Gewichtung gemäß dem vorstehend beschriebenen Ausführungsbeispiel wird bei einer vorteilhaften Ausführungsform der vorliegenden Erfindung, insbesondere bei einer vorteilhaften Ausführungsform des Navigationssystems gemäß der vorliegenden Erfindung, bei der zumindest ein Teil der gewichteten, zum Beispiel der der Kategorie primäres informationselement zugeordneten, Informationen, zum Beispiel mittels eines Lautsprechers und/oder eines Monitors, als mindestens eine der Fahrempfehlungen ausgegeben wird, im Falle eines Routenwechsels dieser Routenwechsel möglichst spät ausgegeben.

Sofern die Vorgabe für das mindestens eine primäre Element der jeweiligen lnformationsliste dagegen durch das primäre Element der räumlich und/oder zeitlich nachfolgenden Einheit bestimmt wird, erfolgt ein Wechsel der als primäres Element bestimmten Information möglichst früh.

Unabhängig von den oder in Verbindung mit den vorstehend beschriebenen Möglichkeiten der Gewichtung des jeweiligen Informationselements ist es auch möglich, dass die Gewichtung des jeweiligen Informationselements, insbesondere die Vorgabe für das mindestens eine primäre Element der jeweiligen Informationsliste, durch die Wahrscheinlichkeit bestimmt wird, dass mindestens zwei der den jeweiligen Einheiten zugeordneten Informationselemente miteinander in Verbindung stehen, insbesondere zusammenhängen.

Ein Wechsel der als primäres Element bestimmten Information erfolgt gemäß diesem vorteilhaften Ausführungsbeispiel unabhängig von der Richtung der Route immer an der gleichen Stelle.

Gemäß einer vorteilhaften Ausführungsform der vorliegenden Erfindung gibt es für die Gewichtung des mindestens einen Informationselements, insbesondere für die Bestimmung des primären Informationselements, somit die vorstehenden drei vorteilhaften Ausprägungen, insbesondere Verfahrensausprägungen, mit deren signifikanten Eigenschaften.

Die vorliegende Erfindung bietet den Vorteil, dass die im Kapitel "Stand der Technik" anhand der beiden Routenbeispiele dargestellten Nachteile in der Kontinuität der Informationsabbildung beseitigt werden können.

Dabei steht zweckmäßigerweise im Wesentlichen die Gewichtung des primären Elements im Fokus. Die Sortierung der anderen Informationselementalternativen ist gemäß einer vorteilhaften Ausführungsform der vorliegenden Erfindung von untergeordneter Bedeutung.

Des Weiteren bietet die vorliegenden Erfindung den Vorteil, dass
- abschnittsbezogene multiple Informationen entsprechend einem Pfad, wie Straßennamen oder -nummer in der Routenliste von Navigationssystemen, optimiert präsentiert werden können;
- eine hohe Kontinuität in der abschnittsbezogenen Informationspräsentation ermöglicht und häufige Wechsel vermieden werden; und
- notwendige Wechsel der abschnittsbezogenen Informatiorispräsentation pfadoptimal erfolgen.

Dabei ist die vorliegende Erfindung nicht an einen bestimmten Informationstyp gebunden; das hier vorgestellte Verfahren lässt sich beispielsweise nicht nur für die Optimierung der Anzeige von Straßennamen oder -nummern in Routenlisten von Navigationssystemen nutzen, sondern kann auch für die Darstellungsoptimierung ähnlicher Problemfälle angewendet werden.

Ferner ist die vorliegende Erfindung nicht auf eine bestimmte Anzahl von Altemativinformationen beschränkt.

Eine vorteilhafte Ausführungsform des Navigationssystems gemäß der vorliegenden Erfindung ermöglicht seinem Nutzer durch eine am Routenverlauf orientierte Prioritätsvergabe bzw. durch eine am Routenverlauf orientierte Sortierung von alternativen Straßennamen und -nummern eine optimierte Darstellung von Altemativnamen und -nummern.

Dabei wird entsprechend der Situation eine hohe Kontinuität in den genutzten Straßen signalisiert. Dieses wird insbesondere bei der Nutzung des primären Informationselements, beispielsweise der primären Straßennummer, zur akustischen Präsentation der mindestens einen Fahrempfehlung deutlich.

Ferner wird gemäß einer vorteilhaften Ausführungsform der vorliegenden Erfindung die Kontinuität des primären Informationselement, beispielsweise der Straßennamen bzw. - nummern, für den Nutzer möglichst lange aufrechterhalten werden, um bei der mindestens einen Fahrempfehlung, insbesondere bei akustischen Fahrempfehlungen, keine Irritationen zu provozieren.

Gemäß einer vorteilhaften Ausführungsform der vorliegenden Erfindung, insbesondere des Navigationssystems gemäß der vorliegenden Erfindung, erfolgt also die Darstellung von abschnittsbezogenen oder auf Einheiten bezogenen multiplen und an sich gleichwertigen Informationen so, dass die Reihenfolge der Informationen für eine Einheit bzw. einen Abschnitt derart sortiert ist, dass
- die Priorität der Information in der Informationsliste für eine Einheit bzw. für einen Abschnitt abnimmt,
- ein Wechsel der Reihenfolge der Informationen minimiert wird und
- ein Wechsel der bedeutenden Informationselemente pfadoptimal je nach Ausprägung, insbesondere Verfahrensausprägung, erfolgt.

Die vorliegende Erfindung betrifft des Weiteren ein Computerprogrammprodukt, das mindestens einen Programmteil aufweist, der zur Durchführung eines Navigationsverfahrens gemäß der vorstehend dargelegten Art ausgebildet ist.

Zudem betrifft die vorliegende Erfindung einen maschinenlesbaren Datenspeicher oder Datenträger, insbesondere ein computerlesbares Speichermodul, zum Beispiel eine C[ompact]D[isc], eine D[igital]V[ersatile]D[isc] oder einen Memory Stick,
- auf dem mindestens ein Computerprogrammprodukt gemäß der vorstehend dargelegten Art aufgezeichnet und/oder gespeichert ist und
- mittels dessen mindestens ein Navigationssystem gemäß der vorstehend dargelegten Art aktualisierbar und/oder updatebar ist.

Die vorliegende Erfindung kann generell zur Optimierung von Präsentationen von auf aufeinanderfolgende Einheiten bezogenen bzw. abschnittsbezogenen Informationen, und insbesondere zur pfadoptimierten Darstellung von abschnittsbezogenen multiplen Informationen, eingesetzt werden.

Die vorliegende Erfindung betrifft, schließlich die Verwendung
- eines Navigationsverfahrens gemäß der vorstehend dargelegten Art und/oder
- mindestens eines Computerprogrammprodukts gemäß der vorstehend dargelegten Art und/oder
- mindestens eines maschinenlesbaren Datenspeichers oder Datenträgers, insbesondere mindestens eines computerlesbaren Speichermoduls, zum Beispiel mindestens einer C[ompact]D[isc], mindestens einer D[igital]V[ersatile]D[isc] oder mindestens eines Memory Sticks, gemäß der vorstehend dargelegten Art
in mindestens einem Navigationssystem gemäß der vorstehend dargelegten Art, zum Beispiel im ein Kartensystem aufweisenden Navigationssystem "RNS-MFD2" der Firma Blaupunkt.

### Kurze Beschreibung der Zeichnungen

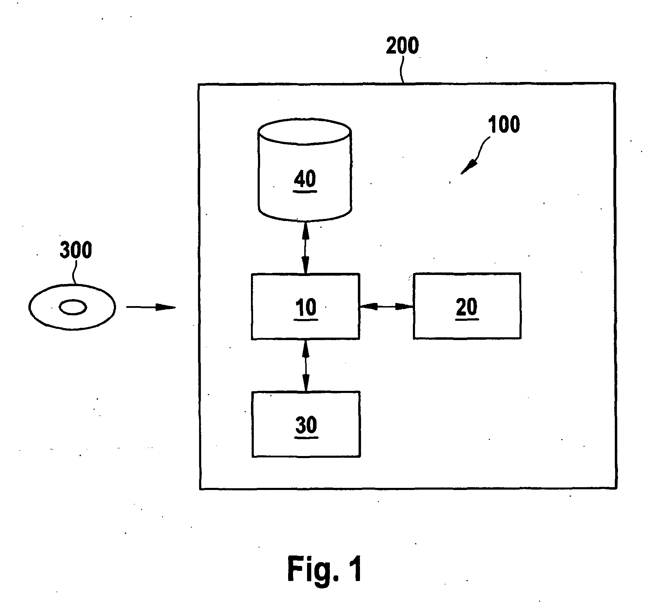

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die von den Ansprüchen 1 und 6 abhängigen Ansprüche verwiesen, andererseits werden weitere Ausgestaltungen, Merkmale und Vorteile der vorliegenden Erfindung nachstehend anhand der durch die Fig. 1 bis Fig. 11 veranschaulichten drei Ausführungsbeispiele näher erläutert.

Es zeigt:
- Fig. 1: in schematischer Darstellung ein Ausführungsbeispiel für ein Navigationssystem gemäß der vorliegenden Erfindung, das ein Informationsverarbeitungssystem aufweist und nach dem Navigationsverfahren gemäß der vorliegenden Erfindung arbeitet;
- Fig. 2: in schematischer, als Straßenkartenausschnitt wiedergegebener Darstellung ein Beispiel für eine Verkehrs- oder Straßensituation, bei der das Navigationssystem aus Fig. 1, und hierbei insbesondere das Informationsverarbeitungssystem aus Fig. 1, eingesetzt werden kann;
- Fig. 3: in schematischer Darstellung ein erstes Beispiel für einen durch Verstärkung optisch hervorgehobenen Routenverlauf in der Verkehrs- oder Straßensituation aus Fig. 2;
- Fig. 4: in schematischer Darstellung ein zweites Beispiel für einen durch Verstärkung optisch hervorgehobenen Routenverlauf in der Verkehrs- oder Straßensituation aus Fig. 2;
- Fig. 5: in schematischer Darstellung ein Beispiel für Informationen in Bezug auf aufeinanderfolgende Einheiten, welche Informationen in dem Navigationssystem aus Fig. 1 gespeichert sind;
- Fig. 6: in schematischer Darstellung ein Ablauf-/Flussdiagramm eines ersten Ausführungsbeispiels für ein Navigationsverfahren gemäß der vorliegenden Erfindung;
- Fig. 7: in schematischer Darstellung ein Ablauf-/Flussdiagramm eines zweiten Ausführungsbeispiels für ein Navigationsverfahren gemäß der vorliegenden Erfindung;
- Fig. 8: in schematischer Darstellung ein Ablauf-/Flussdiagramm für eine Detailansicht eines Schritts des Navigationsverfahrens aus Fig. 6 bzw. aus Fig. 7, nämlich des Schritts der Gewichtung oder Sortierung der Informationselemente einer der Einheiten;
- Fig. 9: in schematischer Darstellung ein Ablauf-/Flussdiagramm eines dritten Ausführungsbeispiels für ein Navigationsverfahren gemäß der vorliegenden Erfindung;
- Fig. 10: in schematischer Darstellung ein Ablauf-/Flussdiagramm für eine Detailansicht eines Schritts des Navigationsverfahrens aus Fig. 9, nämlich des Schritts der Bestimmung der Wahrscheinlichkeit, dass mindestens zwei der den jeweiligen Einheiten zugeordneten Informationselemente miteinander in Verbindung stehen; und
- Fig. 11: in schematischer Darstellung ein Ablauf-/Flussdiagramm für eine Detailansicht eines Schritts des Navigationsverfahrens aus Fig. 9, nämlich des Schritts der Gewichtung oder Sortierung der Informationselemente einer der Einheiten.

Gleiche oder ähnliche Ausgestaltungen, Elemente oder Merkmale sind in Fig. 1 bis Fig. 11 mit identischen oder entsprechenden Bezugszeichen versehen.

### Bester Weg zur Ausführung der vorliegenden Erfindung

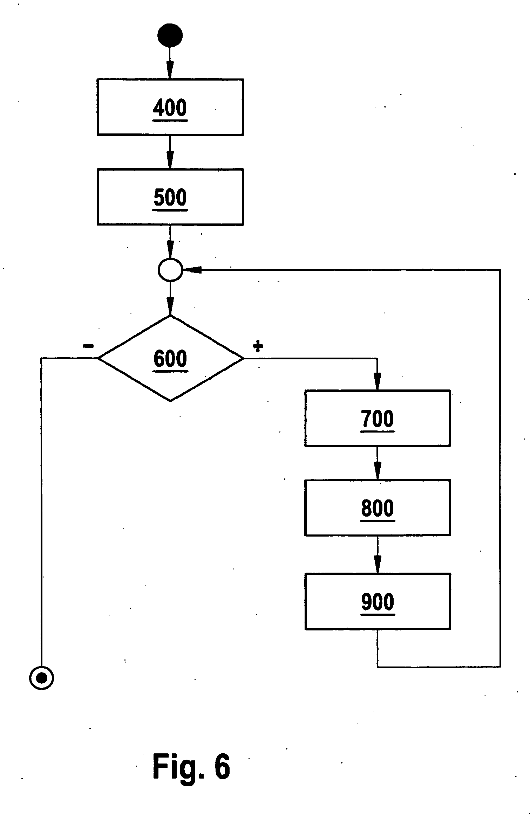

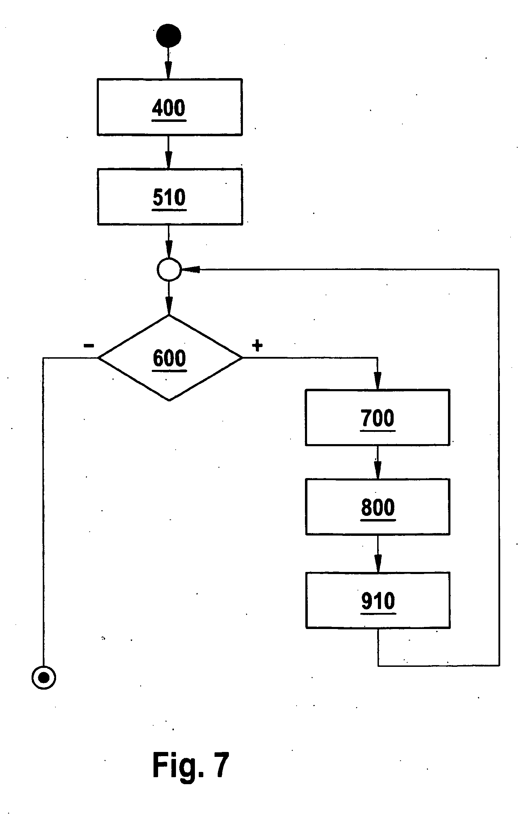

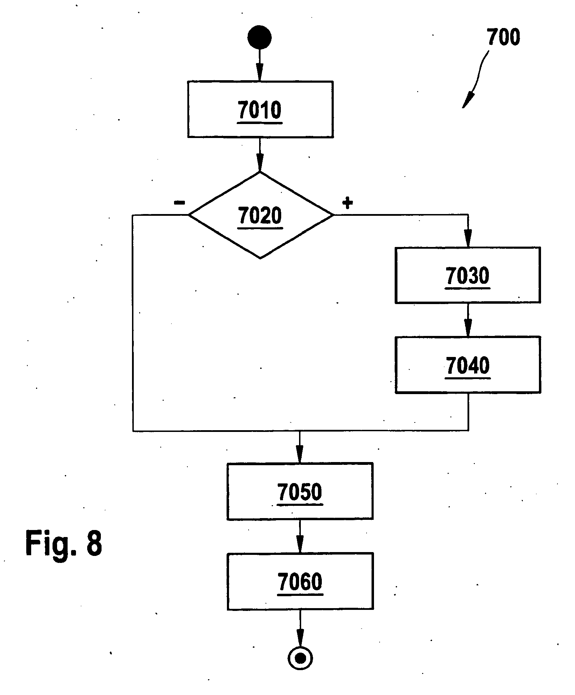

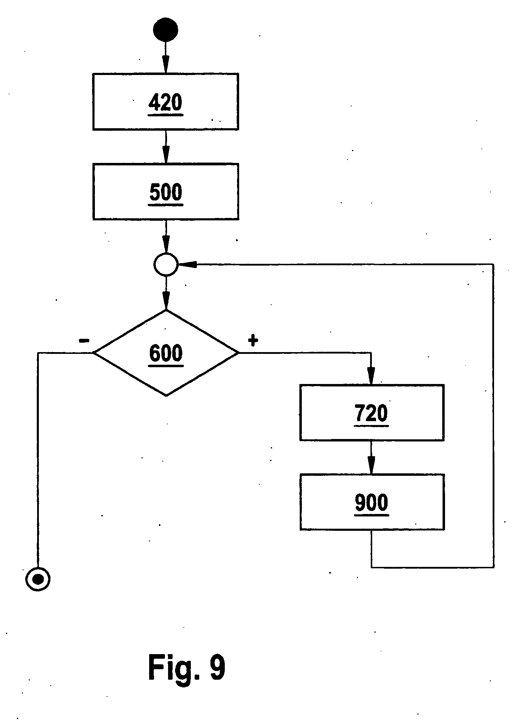

Zur Vermeidung überflüssiger Wiederholungen beziehen sich die nachfolgenden Erläuterungen hinsichtlich der Ausgestaltungen, Merkmale und Vorteile der vorliegenden Erfindung (soweit nicht anderweitig angegeben)
- sowohl auf das in Fig. 6 und Fig. 8 dargestellte erste Ausführungsbeispiel des Navigationsverfahrens gemäß der vorliegenden Erfindung
- als auch auf das in Fig. 7 und Fig. 8 dargestellte zweite Ausführungsbeispiel des Navigationsverfahrens gemäß der vorliegenden Erfindung
- als auch auf das in Fig. 9 bis Fig. 11 dargestellte dritte Ausführungsbeispiel des Navigationsverfahrens gemäß der vorliegenden Erfindung.

In Fig. 1 ist ein Navigationssystem 200 gemäß der vorliegenden Erfindung mit einem Informationsverarbeitungssystem 100, nämlich mit einer Navigationsassistenz.

Die Navigationsassistenz 100 und damit auch das Navigationssystem 200 können mittels eines computerlesbaren Datenspeichers 300 in Form einer C[ompact]D[isc], auf der ein entsprechendes Computerprogramm aufgezeichnet und gespeichert ist, aktualisiert bzw. geupdatet werden. Anstelle der C[ompact]D[isc] kann auch jeder andere geeignete Datenträger, wie etwa eine D[igital]V[ersatile]D[isc], oder jedes andere geeignete Halbleiterspeichermodul, wie etwa ein Memory Stick, eingesetzt werden. Alternativ oder ergänzend hierzu kann das Aktualisieren bzw. Updaten auch online, wie etwa mittels Datenfernübertragung oder per Internet, erfolgen.

Die Navigationsassistenz 100 weist eine Ortungs-/Verarbeitungseinheit 10 zum Ermitteln möglicher Routen 12 (vgl. Fig. 3) bzw. 14 (vgl. Fig. 4) von einem Ausgangsort zu einem Zielort auf.

Die Ortungs-/Verarbeitungseinheit 10 kommuniziert mit einer (oder mehreren) Zielführungseinheit(en) 20 zum Ausgeben von Fahrempfehlungen, die den Führer des Fortbewegungsmittels entlang der vorgegebenen Route 12, 14 führen.

Des Weiteren kommuniziert die Ortungs-/Verarbeitungseinheit 10 mit einem oder mehreren Sensoren 30, durch die die aktuellen Position des Fortbewegungsmittels fortlaufend erfasst werden kann.

Ferner weist die Navigationsassistenz 100 mindestens eine Speichereinheit 40, insbesondere mindestens eine Datenbank, zum Speichern von Informationen in Bezug auf aufeinanderfolgende Einheiten 52, 54, 56, 58, insbesondere in Bezug auf aufeinanderfolgende räumliche und/oder zeitliche Abschnitte, zum Beispiel in Bezug auf Routenabschnitte des Pfades bzw. der Route 12, 14, auf.

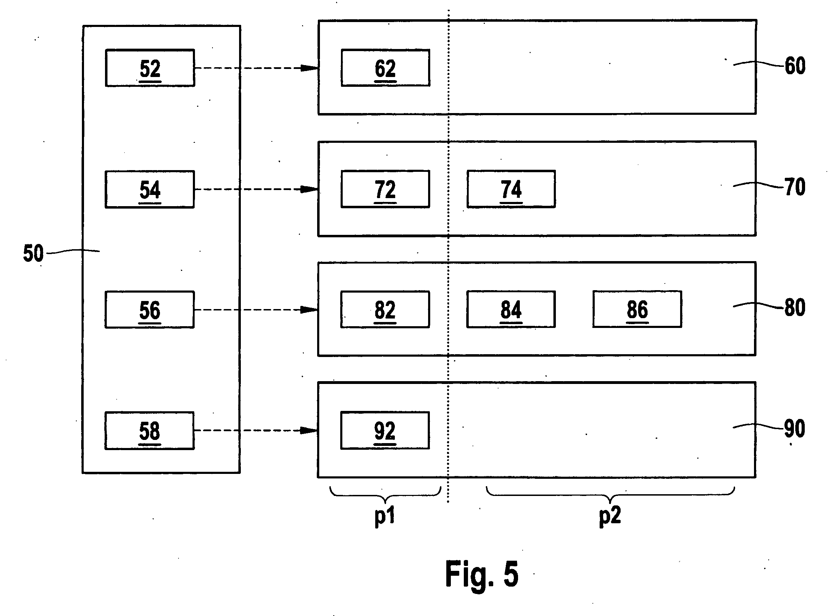

Wie in Fig. 5 dargestellt, erfolgt die Beschreibung der Routen 12 bzw. 14 durch die Summe 50 aufeinanderfolgender Einheiten 52, 54, 56, 58; diese Einheiten 52, 54, 56, 58 können insbesondere in mindestens einer Tabelle und/oder in mindestens einer Routenliste oder Einheitenliste gespeichert werden.

Jeder dieser Einheiten 52, 54, 56, 58 können verschiedene Informationsarten oder verschiedene Informationskategorien zugeordnet sein. Wenn für bestimmte Informationsarten oder Informationskategorien mehrere Informationen zugelassen sind, werden diese durch eine Informationstabelle oder Informationsliste 60, 70, 80, 90 beschrieben.

Im in Fig. 5 dargestellten Beispiel beschreiben die Einheiten 52, 54, 56, 58 Routenabschnitte des Pfades bzw. der Route 12, 14, wobei
- der Abschnitt 52 der Routenstrecke vom Startpunkt bis zum ersten Entscheidungspunkt E1, insbesondere bis zum ersten Ortspunkt bzw. zur ersten Verzweigung,
- der Abschnitt 54 der Routenstrecke vom ersten Entscheidungspunkt E1 bis zum zweiten Entscheidungspunkt E2, insbesondere bis zum zweiten Ortspunkt bzw. zur zweiten Verzweigung,
- der Abschnitt 56 der Routenstrecke vom zweiten Entscheidungspunkt E2 bis zum dritten Entscheidungspunkt E3, insbesondere bis zum dritten Ortspunkt bzw. zur dritten Verzweigung, und
- der Abschnitt 58 der Routenstrecke vom dritten Entscheidungspunkt E3 bis zum Ziel entspricht.

Die Informationslisten 60, 70, 80, 90 sind der Informationskategorie "Fernstraße" zugeordnet.

Jede Informationsliste 60, 70, 80, 90 ist in zwei Prioritätskategorien, nämlich in die Kategorie "primäre Elemente" p1 und in die Kategorie "alternative Elemente" p2 unterteilt und weist mindestens ein Informationselement 62, 72, 74, 82, 84, 86, 92 auf.

Die jeweilige Reihenfolge der Informationselemente 62 bzw. 72, 74 bzw. 82, 84, 86 bzw. 92 in der Informationsliste 60 bzw. 70 bzw. 80 bzw. 90 spiegelt deren jeweilige Bedeutung wider. Dabei hat das jeweils erste Informationselement 62, 72, 82, 92 die jeweils größte Bedeutung und wird als jeweils primäres Element bezeichnet.

Im vorliegenden Fall beschreibt jedes Informationselement 62 bzw. 72, 74 bzw. 82, 84, 86 bzw. 92 einen Straßennamen bzw. eine Straßennummer eines Abschnittes 52 bzw. 54 bzw. 56 bzw. 58 der Route 12, 14.

Die jeweilige Gewichtung oder Sortierung der Informationselemente 62 bzw. 72, 74 bzw. 82, 84, 86 bzw. 92 kann auf unterschiedliche Weise durchgeführt werden.

Ein entscheidendes Merkmal des in Fig. 6 dargestellten ersten Ausführungsbeispiels des Verfahrens der vorliegenden Erfindung ist, dass im Falle eines Wechsels der Straßennummer bzw. des Straßennamens das primäre Informationselement so spät wie möglich wechselt und somit die neue Straßennummer bzw. der neue Straßenname möglichst spät als Fahrempfehlung ausgegeben wird.

Dies bedeutet, dass ein primäres Informationselement, zum Beispiel eine als primäres Informationselement bestimmte Straßennummer bzw. ein als primäres Informationselement bestimmter Straßenname, möglichst lange konstant bleibt. Dabei wird das primäre Informationselement durch den vorherigen Abschnitt 52, 54, 56, 58 im Pfad bzw. der Route 12, 14 bestimmt.

Der Verfahrensablauf für die Bearbeitung der Abschnitte 52, 54, 56, 58 der Route 12, 14 in einer Informationskategorie, nämlich der Informationskategorie "Fernstraße", gemäß dem ersten Ausführungsbeispiel des erfindungsgemäßen Verfahrens wird durch die Fig. 6 beschrieben.

Vor der eigentlichen Abarbeitung der Abschnitte 52, 54, 56, 58 des Pfades 12, 14 wird das bevorzugte primäre Informationselement initialisiert (Bezugszeichen 400), das heißt das bevorzugte primäre Informationselement ist leer. In der folgenden Schleife werden sämtliche Abschnitte 52, 54, 56, 58 des Pfades 12, 14, beginnend mit dem ersten Abschnitt 52, bearbeitet.

Hierbei erfolgt zunächst die Sortierung auf Basis des bevorzugten primären Informationselements, und anschließend wird das primäre Element 62 des aktuellen Abschnitts 52 als neues bevorzugtes primäres Informationselement 62 für die folgenden Abschnitte 54, 56, 58 übernommen.

Nach dem Schritt 400 des Initialisierens des bevorzugten primären Informationselements wird der aktuelle Abschnitt 52 bzw. 54 bzw. 56 bzw. 58 dem ersten Abschnitt 52 des Pfades 12, 14 gleichgesetzt (Bezugszeichen 500).

Daraufhin wird geprüft (Bezugszeichen 600), ob ein aktueller Abschnitt 52 bzw. 54 bzw. 56 bzw. 58 vorhanden ist. Sofern kein aktueller Abschnitt 52 bzw. 54 bzw. 56 bzw. 58 vorhanden ist (Bezugszeichen "-"), wird das Verfahren beendet.

Sofern dagegen ein aktueller Abschnitt 52 bzw. 54 bzw. 56 bzw. 58 vorhanden ist (Bezugszeichen "+"), wird eine Gewichtung (Bezugszeichen 700), nämlich eine Sortierung, der Informationen 62 bzw. 72, 74 bzw. 82, 84, 86 bzw. 92 des aktuellen Abschnitts 52 bzw. 54 bzw. 56 bzw. 58 auf Basis des bevorzugten primären Informationselements 62 bzw. 72 bzw. 82 bzw. 92 durchgeführt.

Die eigentliche Sortierung 700 der Informationen 62 bzw. 72, 74 bzw. 82, 84, 86 bzw. 92 eines Abschnitts 52 bzw. 54 bzw. 56 bzw. 58 auf Basis des vorgegebenen bevorzugten primären Informationselements 62 bzw. 72 bzw. 82 bzw. 92 ist in Fig. 8 dargestellt.

Zu Beginn wird mindestens eine Ergebnisliste initialisiert bzw. gelöscht (Bezugszeichen 7010). Anschließend wird das bevorzugte primäre Informationselement 62 bzw. 72 bzw. 82 bzw. 92 in der Informationsliste 60 bzw. 70 bzw. 80 bzw. 90 des gegebenen Abschnitts 52 bzw. 54 bzw. 56 bzw. 58 gesucht (Bezugszeichen 7020).

Falls das bevorzugte primäre Informationselement 62 bzw. 72 bzw. 82 bzw. 92 vorhanden oder enthalten ist, wird es aus der Informationsliste 60 bzw. 70 bzw. 80 bzw. 90 des Abschnitts 52 bzw. 54 bzw. 56 bzw. 58 entfernt und in die zuvor initialisierte bzw. gelöschte (vgl. Schritt 7010) Ergebnisliste übernommen (Bezugszeichen 7030).

Danach werden die verbliebenen Info-Elemente 74 bzw. 84, 86 des Abschnitts 54 bzw. 56 in die Ergebnisliste übernommen, bevor diese Ergebnisliste als Informationsliste 60, 70, 80, 90 dem jeweiligen Abschnitt 52, 54, 56, 58 zugewiesen werden kann.

Entsprechend dem Beispiel der ersten Route 12 (vgl. Fig. 3), bei dem die gesamte Route 12 auf der Bundesstraße B65 verläuft und nur anteilig die Bundesstraße B6 bzw. die Bundesstraße B3 tangiert, ermöglicht das vorstehend beschriebene erste Ausführungsbeispiel des Verfahrens der vorliegenden Erfindung eine optimierte Routenliste sowie optimierte Fahrempfehlungen.

Als Ergebnis der Sortierung gemäß Fig. 6 und 8 werden folgende, auf die erste Route 12 (vgl. Fig. 3) bezogene Routenliste und Fahrempfehlungen mit optimierter Straßennummernreihenfolge ausgegeben:

| *Routenliste* | | *Fahrempfehlungen* |
|---|---|---|
| + B65 | --> E1 | "Rechts abbiegen und der B65 weiter folgen" |
| + B65 / B6 | --> E2 | "Links abbiegen und der B65 weiter folgen" |
| + B65 / B3 / B6 | --> E3 | "Geradeaus fahren und der B65 weiter folgen" |
| +B65 | | |

Ferner wird die Kontinuität im Straßennamen bzw. in der Straßennummer für den Nutzer möglichst lange aufrechterhalten, um bei den Fahrempfehlungen, insbesondere wenn sie in akustischer Form gegeben werden, keine Irritationen zu provozieren.

Der Wechsel des Straßennamens bzw. der Straßennummer findet bei dem in den Fig. 6 und 8 dargestellten Verfahren so spät wie möglich statt. Dieses Merkmal der Sortierung von Straßennamen bzw. -nummern wird mit der zweiten Route 14 deutlich (vgl. Fig. 4).

Als Ergebnis der Sortierung gemäß Fig. 6 und 8 werden folgende, auf die zweite Route 14 (vgl. Fig. 4) bezogene Routenliste und Fahrempfehlungen mit optimierter Straßennummernreihenfolge ausgegeben:

| *Routenliste* | | *Fahrempfehlungen* |
|---|---|---|
| + B65 | --> E1 | "Rechts abbiegen und der B65 weiter folgen" |
| + B65 / B6 | --> E2 | "Links abbiegen und der B65 weiter folgen" |
| + B65 / B3 / B6 | --> E3 | "Geradeaus fahren und der 83 folgen" |
| + B3 | | |

Ein entscheidendes Merkmal des in Fig. 7 dargestellten zweiten Ausführungsbeispiels des Verfahrens der vorliegenden Erfindung ist, dass im Falle eines Wechsels der Straßennummer bzw. des Straßennamens das primäre Informationselement so früh wie möglich wechselt und somit die neue Straßennummer bzw. der neue Straßenname möglichst früh als Fahrempfehlung ausgegeben wird.

Beim zweiten Ausführungsbeispiel wird das primäre Informationselement durch den nachfolgenden Abschnitt 52, 54, 56, 58 im Pfad bzw. der Route 12, 14 bestimmt.

Der Verfahrensablauf für die Bearbeitung der Abschnitte 52, 54, 56, 58 der Route 12, 14 in einer Informationskategorie, nämlich der Informationskategorie "Fernstraße", gemäß dem zweiten Ausführungsbeispiel des erfindungsgemäßen Verfahrens wird durch die Fig. 7 beschrieben.

Vor der eigentlichen Abarbeitung der Abschnitte 52, 54, 56, 58 des Pfades 12, 14 wird das bevorzugte primäre Informationselement initialisiert (Bezugszeichen 400), das heißt das bevorzugte primäre Informationselement ist leer.

In der folgenden Schleife werden sämtliche Abschnitte 52, 54, 56, 58 des Pfades 12, 14, beginnend mit dem letzten Abschnitt 58, bearbeitet, wobei zunächst die Sortierung auf Basis des bevorzugten primären Informationselements erfolgt und anschließend das primäre Element 92 des aktuellen Abschnitts 58 als neues bevorzugtes Informationselement für die nächsten zu bearbeitenden Abschnitte 56, 54, 52 übernommen wird.

Die eigentliche Sortierung der Informationen eines Abschnitts 56 auf Basis des vorgegebenen bevorzugten primären Elements 92 ist in Fig. 8 dargestellt und entspricht der Sortierung der Informationen eines Abschnitts 52 bzw. 54 bzw. 56 bzw. 58 gemäß der ersten Ausführungsform.

Entsprechend dem Beispiel der ersten Route 12 (vgl. Fig. 3), bei dem die gesamte Route 12 auf der Bundesstraße B65 verläuft und nur anteilig die Bundesstraße B6 bzw. die Bundesstraße B3 tangiert, ermöglicht das vorstehend beschriebene zweite Ausführungsbeispiel des Verfahrens der vorliegenden Erfindung eine optimierte Routenliste sowie optimierte Fahrempfehlungen, wobei sich kein Unterschied zu den anderen Ausprägungen, insbesondere zu den anderen Verfahrensausprägungen, ergibt.

Als Ergebnis der Sortierung gemäß Fig. 7 und 8 werden folgende, auf die erste Route 12 (vgl. Fig. 3) bezogene Routenliste und Fahrempfehlungen mit optimierter Straßennummernreihenfolge ausgegeben:

| *Routenliste* | | *Fahrempfehlungen* |
|---|---|---|
| + B65 | --> E1 | "Rechts abbiegen und der B65 weiter folgen" |
| + B65 / B6 | --> E2 | "Links abbiegen und der B65 weiter folgen" |
| + B65 / B3 / B6 | --> E3 | "Geradeaus fahren und der B65 weiter folgen" |
| + B65 | | |

Im Gegensatz zur ersten Beispielroute 12 ergibt sich zwischen der ersten Ausführungsform des Verfahrens der vorliegenden Erfindung (vgl. Fig. 6) und der zweiten Ausführungsform des Verfahrens der vorliegenden Erfindung (vgl. Fig. 7) für die zweite Route 14 (vgl. Fig. 4) ein signifikanter Unterschied, da der Wechsel der Straßennummer bei der zweiten Ausführungsform des Verfahrens der vorliegenden Erfindung möglichst früh stattfindet.

Als Ergebnis der Sortierung gemäß Fig. 7 und 8 werden folgende, auf die zweite Route 14 (vgl. Fig. 3) bezogene Routenliste und Fahrempfehlungen mit optimierter Straßennummernreihenfolge ausgegeben:

| *Routenliste* | *Fahrempfehlungen* | |
|---|---|---|
| + B65 | --> E1 | "Rechts abbiegen und der B65 weiter folgen" |
| + B65 / B6 | --> E2 | "Links abbiegen und der B3 folgen" |
| + B3 / B6 / B65 --> | E3 | "Geradeaus fahren und der B3 weiter folgen" |
| + B3 | | |

Beim in den Fig. 9 bis 11 dargestellten dritten Ausführungsbeispiel des Verfahrens der vorliegenden Erfindung bestimmt die Nutzungsverteilung eines Informationselements 62 bzw. 72, 74 bzw. 82, 84, 86 bzw. 92 für zusammenhängende Abschnitte das primäre Element 62 bzw. 72 bzw. 82 bzw. 92 eines Abschnitts 52 bzw. 54 bzw. 56 bzw. 58.

Da die Verteilung nur durch bestimmte Eigenschaften, wie Länge oder Fahrzeit, für den aktuellen Abschnitt und nicht durch die Reihenfolge bestimmt ist, bleibt die Stelle des Wechsels von primären informationselementen 62 bzw. 72 bzw. 82 bzw. 92 für jede Route 12, 14 unabhängig von der Richtung gleich.

Der Verfahrensablauf für die Bearbeitung der Abschnitte 52, 54, 56, 58 der Route 12, 14 in einer Informationskategorie, nämlich der Informationskategorie "Fernstraße", gemäß dem dritten Ausführungsbeispiel des erfindungsgemäßen Verfahrens wird durch die Fig. 9 beschrieben.

Zunächst wird die Nutzungsverteilung der Informationselemente 62 bzw. 72, 74 bzw. 82, 84, 86 bzw. 92 bezüglich der zusammenhängenden Abschnitte des Pfades 12, 14 bestimmt oder ermittelt (Bezugszeichen 420).

Anschließend werden in einer Schleife sämtliche Abschnitte 52, 54, 56, 58 des Pfades 12, 14, beginnend mit dem ersten Abschnitt 52, bearbeitet. Dabei werden die Informationselemente 62 bzw. 72, 74 bzw. 82, 84, 86 bzw. 92 des jeweiligen Abschnitts 52 bzw. 54 bzw. 56 bzw. 58 gemäß der zuvor bestimmten Nutzungsverteilung als vorgegebene Reihenfolge sortiert (Bezugszeichen 720).

Die Nutzungsverteilung wird in mindestens einer adressierbaren Liste verwaltet, wobei die Elemente über das Informationselement 62 bzw. 72, 74 bzw. 82, 84, 86 bzw. 92 und den jeweiligen zusammenhängenden Abschnitt, beschrieben durch den ersten und letzten zugehörigen Abschnitt im Pfad, eindeutig bestimmt werden können.

Der jeweilige Wert eines Eintrags wird durch die akkumulierten Eigenschaften des zusammenhängenden Abschnitts bestimmt.

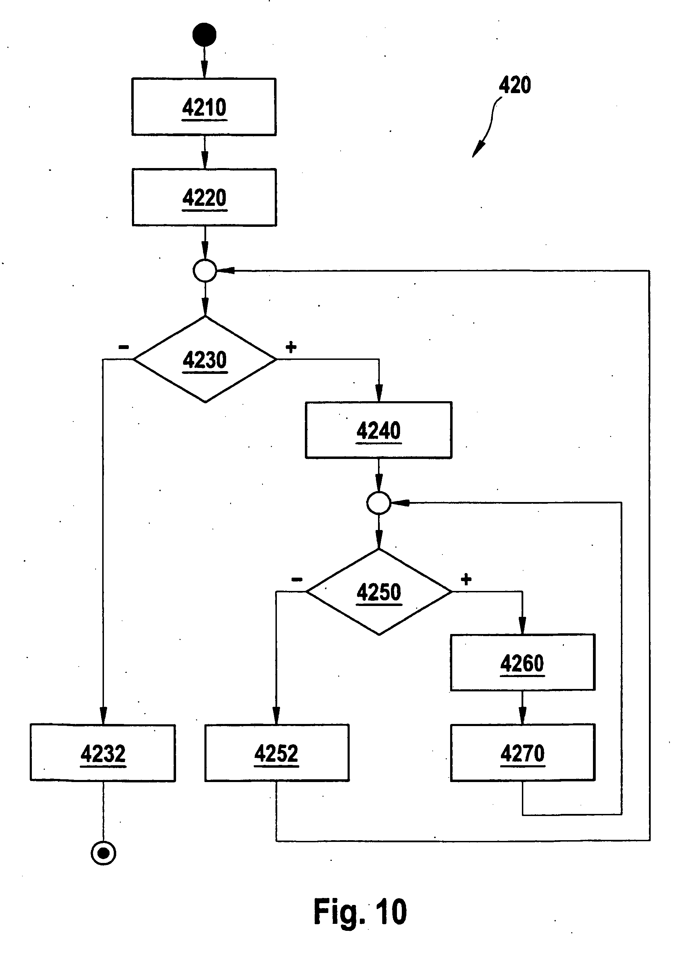

Die Bestimmung oder Ermittlung 420 der Nutzungsverteilung der Informationselemente für zusammenhängende Abschnitte ist in Fig. 10 dargestellt.

Zunächst wird die die Nutzungsverteilung beschreibende Liste initialisiert (Bezugszeichen 4210), so dass diese leer ist.

Im Anschluss daran, werden alle Abschnitte 52, 54, 56, 58 des Pfades 12, 14 bearbeitet, wobei für jedes Informationselement 62, 72, 74, 82, 84, 86, 92 in der Nutzungsverteilungsliste die Eigenschaften des aktuellen Abschnitts akkumuliert und die den zusammenhängenden Abschnitt beschreibenden Start- und Endeinträge aktualisiert werden. Es wird also der aktuelle Abschnitt dem letzten Abschnitt des Pfades gleichgesetzt (Bezugszeichen 4220).

Ferner wird geprüft (Bezugszeichen 4230), ob ein aktueller Abschnitt vorhanden ist.

Sofern kein Abschnitt vorhanden ist (Bezugszeichen "-"), erfolgt die Sortierung (Bezugszeichen 4232) der Nutzungsverteilungsliste entsprechend dem Wert der Informationselemente, zum Beispiel absteigend.

Falls jedoch ein Abschnitt vorhanden ist (Bezugszeichen "+"), wird das aktuelle Informationselement des aktuellen Abschnitts dem ersten Informationselement gteichgesetzt (Bezugszeichen 4240).

Daraufhin wird geprüft (Bezugszeichen 4250), ob ein aktuelles Informationselement vorhanden ist.

Dabei wird vor der Berücksichtigung der Werte des aktuellen Abschnitts ein neuer Eintrag angelegt, wenn das Informationselement noch keinen Eintrag in der Liste aufweist oder der aktuelle Abschnitt nicht an die eingetragenen Abschnitte angrenzt.

Sofern kein aktuelles Informationselement vorhanden ist (Bezugszeichen "-"), wird der aktuelle Abschnitt dem vorherigen Abschnitt des Pfades 12, 14 gleichgesetzt (Bezugszeichen 4252).

Sofern dagegen ein aktuelles Informationselement vorhanden ist (Bezugszeichen "+"), wird das aktuelle Informationselement in die Nutzungsverteilungsliste eingetragen und ein Abschnitt bestimmt bzw. neu angelegt (Bezugszeichen 4260), falls noch nicht vorhanden.

Daraufhin werden die Eigenschaften des aktuellen Abschnitts für das Listenelement aktualisiert (Bezugszeichen 4270).

Nach der Analyse sämtlicher Abschnitte des Pfades wird die Nutzungsverteilungsliste entsprechend dem Wert der Einträge absteigend sortiert, so dass die Nutzungsverteilungsliste als Sortierreihenfolge verwendet werden kann.

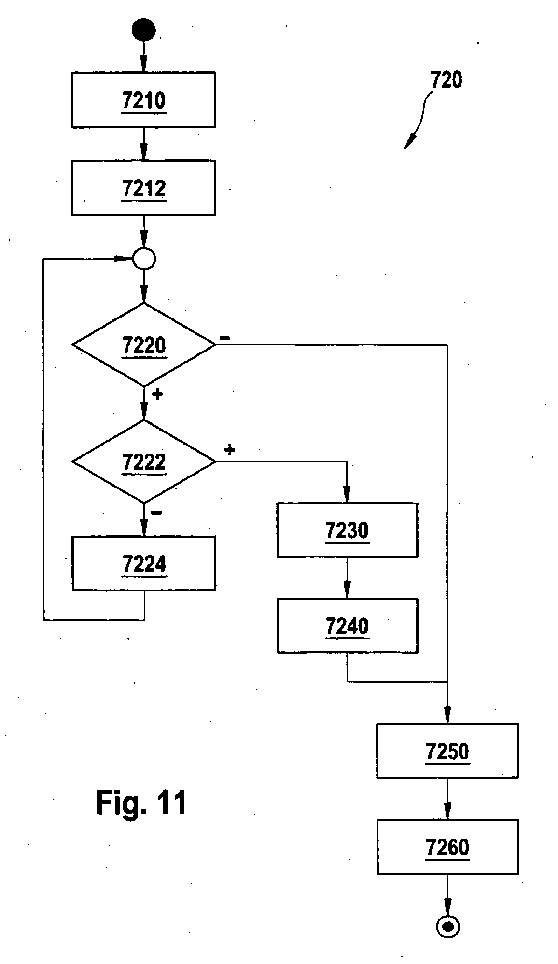

Die eigentliche Sortierung 720 der Informationen eines Abschnitts 52 bzw. 54 bzw. 56 bzw. 58 gemäß vorgegebener Sortierreihenfolge ist in Fig. 11 dargestellt.

Vor der Sortierung der Informationen eines Abschnitts wird die Ergebnisliste initialisiert bzw. gelöscht (Bezugszeichen 7210).

Daraufhin wird das aktuelle Informationselement dem ersten Informationselement der vorgegebenen Sortierreihenfolge gleichgesetzt (Bezugszeichen 7212).

Daraufhin wird geprüft (Bezugszeichen 7220), ob ein aktuelles Informationselement vorhanden ist. Sofern kein aktuelles Informationselement gefunden wird (Bezugszeichen "-"), werden die verbliebenen Informationselemente der Informationsliste des entsprechenden Abschnitts in die Ergebnisliste übernommen (Bezugszeichen 7250).

Daraufhin wird die Ergebnisliste als lnformationsliste des entsprechenden Abschnitts übernommen (Bezugszeichen 7260).

Sofern jedoch ein aktuelles Informationselement gefunden wird (Bezugszeichen "+"), wird in einer anschließenden Schleife über die Informationselemente der vorgegebenen Sortierreihenfolge das aktuelle Informationselement des für diesen Abschnitt geltenden Eintrags in der Informationsliste des entsprechenden Abschnitts gesucht (Bezugszeichen 7222).

Falls das aktuelle Informationselement des für diesen Abschnitt geltenden Eintrags enthalten ist (Bezugszeichen "+"), wird das aktuelle Informationselement als primäres Informationselement in die Ergebnisliste übernommen (Bezugszeichen 7230) und aus der Informationsliste 60 bzw. 70 bzw. 80 bzw. 90 des Abschnitts 52 bzw. 54 bzw. 56 bzw. 58 entfernt (Bezugszeichen 7240).

In diesem Fall wird die Schleife über die Informationselemente der vorgegebenen Sortierreihenfolge abgebrochen und die verbliebenen Elemente des aktuellen Abschnitts übernommen (Bezugszeichen 7250). Im Anschluss wird die Ergebnisliste dem aktuellen Abschnitt zugewiesen (Bezugszeichen 7260).

Sofern jedoch kein aktuelles Informationselement in der Informationsliste 60 bzw. 70 bzw. 80 bzw. 90 des entsprechenden Abschnitts 52 bzw. 54 bzw. 56 bzw. 58 vorhanden ist (Bezugszeichen "-"), wird das aktuelle Informationselement dem nächsten Informationselement der vorgegebenen Sortierreihenfolge gleichgesetzt (Bezugszeichen 7224).

Entsprechend dem Beispiel der ersten Route 12, bei dem die gesamte Route auf der Bundesstraße B65 verläuft und nur anteilig die Bundesstraße B6 bzw. die Bundesstraße B3 tangiert, ergibt sich im Ergebnis nach der Sortierung die folgende Nutzungsverteilung der Straßennummer entsprechend der Länge:

| | *Route 12* | | *B65* | | *B6* | | *B3* | |
|---|---|---|---|---|---|---|---|---|
| *Routenliste* | | *10* | | *10* | | *7* | | *6* |
| + B65 | | 2 | | 2 | | | | |
| --> E1 | | | | | | | | |
| + B6 / B65 | | 1 | | 1 | | 1 | | |
| --> E2 | | | | | | | | |
| + B3 / B6 / B65 | 6 | | 6 | | 6 | | 6 | |
| --> E3 | | | | | | | | |
| + B65 | | 1 | | 1 | | | | |

Basierend auf dieser Verteilung ergeben sich nach der Sortierung gemäß dem in den Fig. 9 bis 11 dargestellten dritten Ausführungsbeispiel des Verfahrens gemäß der vorliegenden Erfindung die im Folgenden dargestellte Routenliste und Fahrempfehlungen mit optimierter Straßennummernreihenfolge.

Da die erste Route 12 die Bundesstraße B65 vollständig nutzt, ergibt sich für dieses Beispiel kein Unterschied zu den anderen beiden Ausführungsbeispielen des Verfahrens der vorliegenden Erfindung (vgl. Fig. 6 bis 8).

| *Routenliste* | | *Fahrempfehlungen* |
|---|---|---|
| + B65 | --> E1 | "Rechts abbiegen und der B65 weiter folgen" |
| + B65 / B6 | --> E2 | "Links abbiegen und der B65 weiter folgen" |
| + B65 / B3 / B6 | --> E3 | "Geradeaus fahren und der B65 weiter folgen" |
| + B65 | | |

Für die zweite Route 14 (vgl. Fig. 4) ergibt sich folgende Nutzungsverteilung der Straßennummern entsprechend der Länge der Straßen:

| | *Route 14* | | *B65* | | *B6* | | *B3* | |
|---|---|---|---|---|---|---|---|---|
| *Routenliste* | | *13* | | *9* | | *7* | | *10* |
| + B65 | | 2 | | 2 | | | | |
| --> E1 | | | | | | | | |
| + B6 / B65 | | 1 | | 1 | | 1 | | |
| --> E2 | | | | | | | | |
| + B3 / B6 / B65 | 6 | | 6 | | 6 | | 6 | |
| --> E3 | | | | | | | | |
| + B3 | | 4 | | | | | | 4 |

Basierend auf dieser Verteilung erzeugt die Sortierung gemäß dem in den Fig. 9 bis 11 dargestellten dritten Ausführungsbeispiel des Verfahrens gemäß der vorliegenden Erfindung die im Folgenden dargestellte Routenliste und Fahrempfehlungen mit optimierter Straßennummernreihenfolge für die zweite Route 14 (vgl. Fig. 4).

Aufgrund des größeren Streckenanteils der Bundesstraße B3 ergibt sich die gleiche optimierte Straßennummernreihenfolge wie beim zweiten Ausführungsbeispiel des Verfahrens der vorliegenden Erfindung:

| *Routenliste* | | *Fahrempfehlungen* |
|---|---|---|
| + B65 | --> E1 | "Rechts abbiegen und der B65 weiter folgen" |
| + B65 / B6 | --> E2 | "Links abbiegen und der B3 folgen" |
| + B3 / B6 / B65 | --> E3 | "Geradeaus fahren und der B3 weiter folgen" |
| + B3 | | |

Bei der gleichen Route mit vertauschtem Start und Ziel bleibt die Stelle des Wechsels der primären Straßennummer im Gegensatz zum ersten und zweiten Ausführungsbeispiel des Verfahrens der vorliegenden Erfindung (vgl. Fig. 6 bis 8) für diese zweite Route 14 (vgl. Fig. 4) in jedem Fall gleich.

Das Verfahren der vorliegenden Erfindung kann somit zur optimierten Abbildung von Straßennamen und Straßennummern entlang einer Route 12, 14 genutzt werden.

Eine vorteilhafte Ausführungsform der vorliegenden Erfindung spiegelt sich
- in der optimierten Anzeige von Straßennamen und/oder Straßennummern, insbesondere in der so genannten Straßennamenliste bzw. Routeninformationsliste, und/oder
- bei der optimierten akustischen Präsentation von Straßennamen und/oder Straßennummern in Fahrempfehlungen
wider.

## Patentansprüche

1. Navigationssystem (200) für ein Fortbewegungsmittel
- zum Ermitteln möglicher Routen von einem Ausgangsort zu einem Zielort anhand von Routennetzdaten, insbesondere anhand von Straßennetzdaten,
- zum Vorgeben einer bevorzugten Route (12) sowie
- zum Ausgeben von Fahrempfehlungen, die mindestens einen Benutzer entlang der vorgegebenen Route (12) führen,
**gekennzeichnet durch**
mindestens ein Informationsverarbeitungssystem (100), insbesondere **durch** mindestens eine Navigationsassistenz, das dazü aüsgebildet ist, Informationen in Bezug auf aufeinanderfolgende Einheiten (52, 54, 56, 58), insbesondere in Bezug auf aufeinanderfolgende räumliche und/oder zeitliche Abschnitte, zum Beispiel in Bezug auf Routenabschnitte mindestens eines Pfades zu verarbeiten,
- wobei jeder Einheit (52, 54, 56, 58) mindestens eine Informationsliste (60, 70, 80, 90) mit mindestens einem Informationselement (62, 72, 74, 82, 84, 86, 92) zugeordnet ist und
- das ferner dazü aüsgebildet ist, in mindestens einer der Informationslisten (60, 70, 80, 90) mindestens eines der Informationselemente (62, 72, 74, 82, 84, 86, 92) unter Berücksichtigung der Beziehung, insbesondere in Abhängigkeit von der Anordnung, der Einheit (52, 54, 56, 58), der diese Informationsliste (60, 70, 80, 90) zugeordnet ist, zu mindestens einer der weiteren Einheiten (52, 54, 56, 58) zu gewichlen

2. Navigationssystem gemäß Anspruch 1, **dadurch gekennzeichnet,**
- **dass** das mindestens eine Informationselement (62, 72, 74, 82, 84, 86, 92) bei der Gewichtung mindestens einer von mindestens zwei Prioritätskategorien (p1, p2), zum Beispiel der Kategorie primäres Informationselement (p1) bzw. der Kategorie alternatives Informationselement (p2), zuordbar ist und/oder
- **dass** das mindestens eine Informationselement (62, 72, 74, 82, 84, 86, 92) in der jeweiligen Informationsliste (60, 70, 80, 90) entsprechend seiner Gewichtung sortierbar ist, wobei die Anordnung oder Reihenfolge der Informationselemente (62, 72, 74, 82, 84, 86, 92) in der jeweiligen Informationsliste (60, 70, 80, 90) die Bedeutung oder die Wertigkeit des jeweiligen Informationselements (62, 72, 74, 82, 84, 86, 92) widerspiegelt.

3. Navigationssystem gemäß Anspruch 1 oder 2, **dadurch gekennzeichnet,**
- **dass** die Informationslisten (60, 70, 80, 90) jeweils mindestens eine Informationskategorie oder Informationsart betreffen, insbesondere dass das mindestens eine Informationselement (62, 72, 74, 82, 84, 86, 92) der jeweiligen Informationsliste (60, 70, 80, 90) mindestens einen Straßennamen und/oder mindestens eine Straßennummer aufweist, und/oder
- **dass** bei der Gewichtung des mindestens einen Informationselements (62, 72, 74, 82, 84, 86, 92) der jeweiligen Informationsliste (60, 70, 80, 90) nur dieselbe Informationskategorie oder dieselbe Informationsart betreffende Informationslisten (60, 70, 80, 90) der anderen Einheiten (52, 54, 56, 58) zu berücksichtigen sind und/oder
- **dass** die Gewichtung der jeweiligen Informationselemente (62, 72, 74, 82, 84, 86, 92) von Informationslisten (60, 70, 80, 90) unterschiedlicher Informationskategorien oder unterschiedlicher Informationsarten auf unterschiedliche Weise bestimmbar ist.

4. Navigationssystem gemäß mindestens einem der Ansprüche 1 bis 3, **dadurch gekennzeichnet, dass** die Gewichtung des jeweiligen Informationselements (62, 72, 74, 82, 84, 86, 92)
- durch die Gewichtung des entsprechenden Informationselements (62, 72, 74, 82, 84, 86, 92) in mindestens einer der weiteren Einheiten (52, 54, 56, 58), insbesondere im vorangehenden und/oder nachfolgenden räumlichen und/oder zeitliche Abschnitt, zum Beispiel im vorangehenden und/oder nachfolgenden Routenabschnitt des Pfades, und/oder
- durch die Wahrscheinlichkeit, dass mindestens zwei der den jeweiligen Einheiten (52, 54, 56, 58) zugeordneten Informationselemente (62, 72, 74, 82, 84, 86, 92) miteinander in Verbindung stehen, insbesondere zusammenhängen,
bestimmbar ist.

5. Navigationssystem gemäß mindestens einem der Ansprüche 1 bis 4, **dadurch gekennzeichnet, dass** zumindest ein Teil der gewichteten, zum Beispiel der der Kategorie primäres Informationselement (62, 72, 74, 82, 84, 86, 92) zugeordneten, Informationen als mindestens eine der Fahrempfehlungen ausgegeben werden.

6. Navigationsverfahren zum Verarbeiten von Informationen in Bezug auf aufeinanderfolgende Einheiten (52, 54, 56, 58), insbesondere in Bezug auf aufeinanderfolgende räumliche und/oder zeitliche Abschnitte, zum Beispiel in Bezug auf Routenabschnitte mindestens eines Pfades, wobei jeder Einheit (52, 54, 56, 58) mindestens eine Informationsliste (60, 70, 80, 90) mit mindestens einem Informationselement (62, 72, 74, 82, 84, 86, 92) zugeordnet wird,
**dadurch gekennzeichnet,**
**dass** in mindestens einer der Informationslisten (60, 70, 80, 90) mindestens eines der Informationselemente (62, 72, 74, 82, 84, 86, 92) unter Berücksichtigung der Beziehung, insbesondere in Abhängigkeit von der Anordnung, der Einheit (52, 54, 56, 58), der diese Informationsliste (60, 70, 80, 90) zugeordnet ist, zu mindestens einer der weiteren Einheiten (52, 54, 56, 58) gewichtet wird.

7. Navigationsverfahren gemäß Anspruch 6, **dadurch gekennzeichnet,**
- **dass** das mindestens eine Informationselement (62, 72, 74, 82, 84, 86, 92) bei der Gewichtung mindestens einer von mindestens zwei Prioritätskategorien (p1, p2), zum Beispiel der Kategorie primäres Informationselement (p1) bzw. der Kategorie alternatives Informationselement (p2), zugeordnet wird und/oder
- **dass** das mindestens eine Informationselement (62, 72, 74, 82, 84, 86, 92) in der jeweiligen Informationsliste (60, 70, 80, 90) entsprechend seiner Gewichtung sortiert wird, wobei die Anordnung oder Reihenfolge der Informationselemente (62, 72, 74, 82, 84, 86, 92) in der jeweiligen Informationsliste (60, 70, 80, 90) die Bedeutung oder die Wertigkeit des jeweiligen Informationselements (62, 72, 74, 82, 84, 86, 92) widerspiegelt.

8. Navigationsverfahren gemäß Anspruch 6 oder 7, **dadurch gekennzeichnet,**
- **dass** die lnformationslisten (60, 70, 80, 90) jeweils mindestens eine Informationskategorie oder Informationsart betreffen, insbesondere dass das mindestens eine Informationselement (62, 72, 74, 82, 84, 86, 92) der jeweiligen Informationsliste (60, 70, 80, 90) mindestens einen Straßennamen und/oder mindestens eine Straßennummer aufweist, und/oder
- **dass** bei der Gewichtung des mindestens einen Informationselements (62, 72, 74, 82, 84, 86, 92) der jeweiligen Informationsliste (60, 70, 80, 90) nur dieselbe Informationskategorie oder dieselbe Informationsart betreffende Informationslisten (60, 70, 80, 90) der anderen Einheiten (52, 54, 56, 58) berücksichtigt wird und/oder
- **dass** die Gewichtung der jeweiligen Informationselemente (62, 72, 74, 82, 84, 86, 92) von Informationslisten (60, 70, 80, 90) unterschiedlicher Informationskategorien oder unterschiedlicher Informationsarten auf unterschiedliche Weise bestimmt wird.

9. Navigationsverfahren gemäß mindestens einem der Ansprüche 6 bis 8, **dadurch gekennzeichnet, dass** die Gewichtung des jeweiligen Informationselements (62, 72, 74, 82, 84, 86, 92)
- durch die Gewichtung des entsprechenden Informationselements (62, 72, 74, 82, 84, 86, 92) in mindestens einer der weiteren Einheiten (52, 54, 56, 58), insbesondere im vorangehenden und/oder nachfolgenden räumlichen und/oder zeitliche Abschnitt, zum Beispiel im vorangehenden und/oder nachfolgenden Routenabschnitt des Pfades, und/oder
- durch die Wahrscheinlichkeit, dass mindestens zwei der den jeweiligen Einheiten (52, 54, 56, 58) zugeordneten Informationselemente (62, 72, 74, 82, 84, 86, 92) miteinander in Verbindung stehen, insbesondere zusammenhängen,
bestimmt wird.

10. Computerprogrammprodukt, das mindestens einen Programmkil aüfveist, der zur Durch führung eines Navigationsverfahrens gemäß mindestens einem der Ansprüche 6 bis 9 aüsgebildet ist.

11. Maschinenlesbarer Datenspeicher oder Datenträger (300), insbesondere computerlesbares Speichermodul, zum Beispiel C[ompact]D[isc], D[igital]V[ersatile]D[isc] oder Memory Stick,
- auf dem mindestens ein Computerprogrammprodukt gemäß Anspruch 10 aufgezeichnet und/oder gespeichert ist und
- mittels dessen mindestens ein Navigationssystem (200) gemäß mindestens einem der Ansprüche 1 bis 5 aktüalisierbar ünd/oder üpdakbar ist.

12. Verwendung eines Navigationsverfahrens gemäß mindestens einem der Ansprüche 6 bis 9 und/oder mindestens eines Computerprogrammprodukts gemäß Anspruch 10 und/oder mindestens eines maschinenlesbaren Datenspeichers oder Datenträgers (300), insbesondere mindestens eines computerlesbaren Speichermoduls, zum Beispiel mindestens einer C[ompact]D[isc], mindestens einer D[igital]V[ersatile]D[isc] oder mindestens eines Memory Sticks, gemäß Anspruch 11 in mindestens einem Navigationssystem (200) gemäß mindestens einem der Ansprüche 1 bis 5.

## Claims

1. Navigation system (200) for a means of transport
- for ascertaining possible routes from a starting location to a destination using route network data, particularly using road network data,
- for prescribing a preferred route (12) and
- for outputting driver recommendations that take at least one user along the prescribed route (12), **characterized by**
at least one information processing system (100), particularly by at least one navigation assistant, which is designed to process information concerning successive units (52, 54, 56, 58), particularly concerning successive physical and/or temporal sections, for example concerning route sections of at least one path,
- wherein each unit (52, 54, 56, 58) has at least one associated information list (60, 70, 80, 90) containing at least one information element (62, 72, 74, 82, 84, 86, 92), and
- which is also designed to weight at least one of the information elements (62, 72, 74, 82, 84, 86, 92) in at least one of the information lists (60, 70, 80, 90) by taking account of the relationship, particularly on the basis of the arrangement, of the unit (52, 54, 56, 58) with which this information list (60, 70, 80, 90) is associated with respect to at least one of the further units (52, 54, 56, 58).

2. Navigation system according to Claim 1, **characterized**
- **in that** the at least one information element (62, 72, 74, 82, 84, 86, 92) can be assigned to at least one of at least two priority categories (p1, p2), for example the category primary information element (p1) or the category alternative information element (p2), during the weighting and/or
- **in that** the at least one information element (62, 72, 74, 82, 84, 86, 92) in the respective information list (60, 70, 80, 90) can be sorted according to its weighting, wherein the arrangement or order of the information elements (62, 72, 74, 82, 84, 86, 92) in the respective information list (60, 70, 80, 90) reflects the significance or the value of the respective information element (62, 72, 74, 82, 84, 86, 92) .

3. Navigation system according to Claim 1 or 2, **characterized**
- **in that** the information lists (60, 70, 80, 90) each relate to at least one information category or information type, particularly in that the at least one information element (62, 72, 74, 82, 84, 86, 92) in the respective information list (60, 70, 80, 90) has at least one road name and/or at least one road number, and/or
- **in that** the weighting of the at least one information element (62, 72, 74, 82, 84, 86, 92) in the respective information list (60, 70, 80, 90) needs to take account of only those information lists (60, 70, 80, 90) of the other units (52, 54, 56, 58) that relate to the same information category or the same information type, and/or
- **in that** the weighting of the respective information elements (62, 72, 74, 82, 84, 86, 92) from information lists (60, 70, 80, 90) in different information categories or of different information types can be determined in different ways.

4. Navigation system according to at least one of Claims 1 to 3, **characterized in that** the weighting of the respective information element (62, 72, 74, 82, 84, 86, 92) can be determined
- by the weighting of the relevant information element (62, 72, 74, 82, 84, 86, 92) in at least one of the further units (52, 54, 56, 58), particularly in the preceding and/or subsequent physical and/or temporal section, for example in the preceding and/or subsequent route section of the path, and/or
- by the probability of at least two of the information elements (62, 72, 74, 82, 84, 86, 92) associated with the respective units (52, 54, 56, 58) being connected to one another, particularly being inter-related.

5. Navigation system according to at least one of Claims 1 to 4, **characterized in that** at least some of the weighted information, for example the information associated with the category primary information element (62, 72, 74, 82, 84, 86, 92), is output as at least one of the driving recommendations.

6. Navigation method for processing information concerning successive units (52, 54, 56, 58), particularly concerning successive physical and/or temporal sections, for example concerning route sections of at least one path, wherein each unit (52, 54, 56, 58) is assigned at least one information list (60, 70, 80, 90) containing at least one information element (62, 72, 74, 82, 84, 86, 92),
**characterized**
**in that** at least one of the information elements (62, 72, 74, 82, 84, 86, 92) in at least one of the information lists (60, 70, 80, 90) is weighted by taking account of the relationship, particularly on the basis of the arrangement, of the unit (52, 54, 56, 58) with which this information list (60, 70, 80, 90) is associated with respect to at least one of the further units (52, 54, 56, 58).

7. Navigation method according to Claim 6, **characterized**
- **in that** the at least one information element (62, 72, 74, 82, 84, 86, 92) is assigned to at least one of at least two priority categories (p1, p2), for example the category primary information element (p1) or the category alternative information element (p2), during the weighting, and/or
- **in that** the at least one information element (62, 72, 74, 82, 84, 86, 92) in the respective information list (60, 70, 80, 90) is sorted according to its weighting, wherein the arrangement or order of the information elements (62, 72, 74, 82, 84, 86, 92) in the respective information list (60, 70, 80, 90) reflects the significance or the value of the respective information element (62, 72, 74, 82, 84, 86, 92) .

8. Navigation method according to Claim 6 or 7, **characterized**
- **in that** the information lists (60, 70, 80, 90) each relate to at least one information category or information type, particularly in that the at least one information element (62, 72, 74, 82, 84, 86, 92) in the respective information list (60, 70, 80, 90) has at least one road name and/or at least one road number, and/or
- **in that** the weighting of the at least one information element (62, 72, 74, 82, 84, 86, 92) in the respective information list (60, 70; 80, 90) takes account of only those information lists (60, 70, 80, 90) of the other units (52, 54, 56, 58) that relate to the same information category or the same information type, and/or
- **in that** the weighting of the respective information elements (62, 72, 74, 82, 84, 86, 92) from information lists (60, 70, 80, 90) in different information categories or of different information types is determined in different ways.

9. Navigation method according to at least one of Claims 6 to 8, **characterized in that** the weighting of the respective information element (62, 72, 74, 82, 84, 86, 92) is determined
- by the weighting of the relevant information element (62, 72, 74, 82, 84, 86, 92) in at least one of the further units (52, 54, 56, 58), particularly in the preceding and/or subsequent physical and/or temporal section, for example in the preceding and/or subsequent route section of the path, and/or
- by the probability of at least two of the information elements (62, 72, 74, 82, 84, 86, 92) associated with the respective units (52, 54, 56, 58) being connected to one another, particularly being inter-related.

10. Computer program product, which has at least one program portion that is designed to carry out a navigation method according to at least one of Claims 6 to 9.

11. Machine-readable data memory or data storage medium (300), particularly a computer-readable memory module, for example a C[ompact] D[isc], D[igital] V[ersatile] D[isc] or memory stick,
- on which at least one computer program product according to Claim 10 is recorded and/or stored and
- which can be used to update at least one navigation system (200) according to at least one of Claims 1 to 5.

12. Use of a navigation method according to at least one of Claims 6 to 9 and/or of at least one computer program product according to. Claim 10 and/or of at least one machine-readable data memory or data storage medium (300), particularly of at least one computer-readable memory module, for example at least one C[ompact] D[isc], at least one D[igital] V[ersatile] D[isc] or at least one memory stick, according to Claim 11 in at least one navigation system (200) according to at least one of Claims 1 to 5.

## Revendications

1. Système de navigation (200) pour moyen de déplacement, destiné à
déterminer des itinéraires possibles entre un point de départ et un point de destination à l'aide de données de réseau d'itinéraire, en particulier à l'aide de données de réseau routier,
définir un itinéraire préféré (12) et
délivrer des recommandations de conduite qui guident au moins un utilisateur sur l'itinéraire (12) défini,
**caractérisé par**
au moins un système (100) de traitement d'informations, en particulier au moins un système d'assistance à la navigation, configuré pour traiter des informations concernant les unités successives (52, 54, 56, 58), en particulier sur des parties spatiales et/ou temporelles successives, par exemple sur des parties d'itinéraire d'au moins un parcours,
au moins une liste (60, 70, 70, 90) d'informations qui présente au moins un élément d'information (62, 72, 74, 82, 84, 86, 92) étant associée à chaque unité (52, 54, 56, 58),
et en outre configuré pour pondérer au moins l'un des éléments (62, 72, 74, 82, 84, 86, 92) d'information d'au moins l'une des listes (60, 70, 80, 90) d'informations par rapport à au moins l'une des unités (52, 54, 56, 58) en tenant compte de la relation et en particulier en fonction de l'agencement des unités (52, 54, 56, 58) par rapport à l'unité (52, 54, 56, 58) à laquelle cette liste (60, 70, 80, 90) d'informations est associée.

2. Système de navigation selon la revendication 1, **caractérisé en ce que** dans la pondération, le ou les éléments d'information (62, 72, 74, 82, 84, 86, 92) peuvent être attribués à au moins l'une parmi au moins deux catégories de priorité (p1, p2), par exemple à la catégorie (p1) des éléments primaires d'information ou à la catégorie (p2) des éléments alternatifs d'information, et/ou **en ce que** le ou les éléments d'information (62, 72, 74, 82, 84, 86, 92) de la liste (60, 70, 80, 90) d'informations respective peuvent être triés en fonction de leur pondération, l'agencement ou la succession des éléments d'information (62, 72, 74, 82, 84, 86, 92) de la liste (60, 70, 80, 90) d'informations respectives reflétant l'importance ou la valeur de l'élément d'information (62, 72, 74, 82, 84, 86, 92) respectif.

3. Système de navigation selon les revendications 1 ou 2, **caractérisé en ce que** chacune des listes (60, 70, 80, 90) d'informations concerne au moins une catégorie ou un type d'information, en particulier **en ce que** le ou les éléments d'information (62, 72, 74, 82, 84, 86, 92) de chaque liste (60, 70, 80, 90) d'informations présente au moins un nom de rue et/ou au moins un numéro de rue, et/ou **en ce que** dans la pondération du ou des éléments d'information (62, 72, 74, 82, 84, 86, 92) de la liste (60, 70, 80, 90) d'informations respective, seules les listes (60, 70, 80, 90) d'informations des autres unités (52, 54, 56, 58) qui concernent la même catégorie d'information ou le même type d'information sont prises en compte et/ou **en ce que** les pondérations de chaque élément d'information (62, 72, 74, 82, 84, 86, 92) de listes (60, 70, 80, 90) d'informations de catégories différentes ou de types différents d'information peuvent être déterminées de manière différente.

4. Système de navigation selon au moins l'une des revendications 1 à 3, **caractérisé en ce que** la pondération de chaque élément (62, 72, 74, 82, 84, 86, 92) d'information peut être déterminée par la pondération de l'élément d'information (62, 72, 74, 82, 84, 86, 92) correspondant d'au moins l'une des autres unités (52, 54, 56, 58), en particulier dans une section spatiale et/ou temporelle précédente et/ou suivante, par exemple dans la partie précédente et/ou la partie suivante de l'itinéraire, et/ou par la probabilité qu'au moins deux des éléments d'information (62, 72, 74, 82, 84, 86, 92) associés aux unités (52, 54, 56, 58) respectives soient associés les uns aux autres, et en particulier dépendent les uns des autres.

5. Système de navigation selon au moins l'une des revendications 1 à 4, **caractérisé en ce qu'**au moins une partie des informations pondérées associées par exemple à la catégorie de l'élément primaire d'information (62, 72, 74, 82, 84, 86, 92) est délivrée en tant que recommandation ou recommandations de conduite.

6. Procédé de navigation destiné à traiter des informations concernant des unités successives (52, 54, 56, 58), en particulier concernant des sections spatiales et/ou temporelles successives, par exemple des parties d'itinéraire d'au moins un parcours,
au moins une liste (60, 70, 80, 90) d'informations présentant au moins un élément d'information (62, 72, 74, 82, 84, 86, 92) étant associée à chaque unité (52, 54, 56, 58),
**caractérisé en ce que**
au moins l'un des éléments (62, 72, 74, 82, 84, 86, 92) d'information d'au moins l'une des listes (60, 70, 80, 90) d'informations est pondéré par rapport à au moins l'une des unités (52, 54, 56, 58) en tenant compte de la relation et en particulier en fonction de l'agencement des unités (52, 54, 56, 58) par rapport à l'unité (52, 54, 56, 58) à laquelle cette liste (60, 70, 80, 90) d'informations est associée.

7. Procédé de navigation selon la revendication 6, **caractérisé en ce que** dans la pondération, le ou les éléments d'information (62, 72, 74, 82, 84, 86, 92) peuvent être attribués à au moins l'une parmi au moins deux catégories de priorité (p1, p2), par exemple à la catégorie (p1) des éléments primaires d'information ou à la catégorie (p2) des éléments alternatifs d'information, et/ou **en ce que** le ou les éléments d'information (62, 72, 74, 82, 84, 86, 92) de la liste (60, 70, 80, 90) d'informations respective peuvent être triés en fonction de leur pondération, l'agencement ou la succession des éléments d'information (62, 72, 74, 82, 84, 86, 92) de la liste (60, 70, 80, 90) d'informations respectives reflétant l'importance ou la valeur de l'élément d'information (62, 72, 74, 82, 84, 86, 92) respectif.

8. Procédé de navigation selon les revendications 6 ou 7, **caractérisé en ce que** chacune des listes (60, 70, 80, 90) d'informations concerne au moins une catégorie ou un type d'information, en particulier **en ce que** le ou les éléments d'information (62, 72, 74, 82, 84, 86, 92) de chaque liste (60, 70, 80, 90) d'informations présente au moins un nom de rue et/ou au moins un numéro de rue, et/ou **en ce que** dans la pondération du ou des éléments d'information (62, 72, 74, 82, 84, 86, 92) de la liste (60, 70, 80, 90) d'informations respective, seules les listes (60, 70, 80, 90) d'informations des autres unités (52, 54, 56, 58) qui concernent la même catégorie d'information ou le même type d'information sont prises en compte et/ou **en ce que** les pondérations de chaque élément d'information (62, 72, 74, 82, 84, 86, 92) de listes (60, 70, 80, 90) d'informations de catégories différentes ou de types différents d'information peuvent être déterminées de manière différente.

9. Procédé de navigation selon au moins l'une des revendications 6 à 8, **caractérisé en ce que** la pondération de chaque élément (62, 72, 74, 82, 84, 86, 92) d'information peut être déterminée par la pondération de l'élément d'information (62, 72, 74, 82, 84, 86, 92) correspondant d'au moins l'une des autres unités (52, 54, 56, 58), en particulier dans une section spatiale et/ou temporelle précédente et/ou suivante, par exemple dans la partie précédente et/ou la partie suivante de l'itinéraire, et/ou par la probabilité qu'au moins deux des éléments d'information (62, 72, 74, 82, 84, 86, 92) associés aux unités (52, 54, 56, 58) respectives soient associés les uns aux autres, et en particulier dépendent les uns des autres.

10. Produit de programme informatique qui présente au moins une trousse de programme configurée pour mettre en oeuvre un procédé de navigation selon au moins l'une des revendications 6 à 9.

11. Mémoire de données lisible par machine ou support de données (300) lisible par machine, en particulier module de mémoire lisible par ordinateur, par exemple Compact Disc, Digital Versatile Disc ou bâtonnet de mémoire, sur lesquels au moins un produit de programme informatique selon la revendication 10 est écrit et/ou conservé en mémoire et au moyen duquel un système de navigation (200) selon au moins l'une des revendications 1 à 5 peut être actualisé et/ou mis à jour.

12. Utilisation d'un procédé de navigation selon au moins l'une des revendications 6 à 9 et/ou d'au moins un produit de programme informatique selon la revendication 10 et/ou d'au moins une mémoire de. données ou support de données (300) lisible par machine, en particulier d'au moins un module de mémoire lisible par ordinateur, par exemple au moins un Compact Disc, au moins un Digital Versatile Disc ou au moins un bâtonnet de mémoire, selon la revendication 11, dans au moins un système de navigation (200) selon au moins l'une des revendications 1 à 5.
